# EUROPÄISCHE PATENTANMELDUNG

(11) **EP 2 944 510 A1**
(43) Veröffentlichungstag der Anmeldung: **18.11.2015**
(21) Anmeldenummer: 14405042.4
(22) Anmeldetag: 14.05.2014
(51) Int. Cl.: B60N 2/44

(54) **Fahrzeugsitz mit einstellbarer Sitzfläche**

(71) Anmelder: Lantal Textiles AG, 4901 Langenthal (CH)
(72) Erfinder: von Ballmoos, Roland, 8703 Erlenbach (CH); Gühmann, Andreas, 8118 Pfaffhausen (CH); Rohrbach, Oliver, 4702 Oensingen (CH)
(74) Vertreter: Kessler, Stephan

(57) **Zusammenfassung**

Die vorliegende Anmeldung betrifft ein Fahrzeugsitz (1) mit einer Sitzfläche (2) mit einer Vorderkante (16; 16.1, 16.2) und einer Hinterkante (17) sowie eine an der Hinterkante (17) angeordnete und zur Sitzfläche (2) in einem Winkel stehende Rückenlehne (3). Die Sitzfläche (2) ist in einen Hauptteil (4) und mindestens ein Vorderteil (5; 5.1, 5.2) unterteilt. Der Hauptteil (4) und das mindestens eine Vorderteil (5; 5.1, 5.2) sind mittels einer Verstellvorrichtung relativ zueinander bewegbar, um einen Abstand zwischen der Vorderkante (16; 16.1; 16.2) und der Hinterkante (17) der Sitzfläche (2) dynamisch einstellen zu können. Zwischen dem Hauptteil (4) und dem mindestens einen Vorderteil (5; 5.1, 5.2) sind wenigstens zwei aufblasbare Kammern (6, 7; 6.1, 6.2, 7.1, 7.2) angeordnet, welche in Abhängigkeit des Abstandes (D; D1, D2) der Vorderkante (16; 16.1, 16.2) zur Hinterkante (17) aufblasbar und entleerbar sind.

## Beschreibung

### Technisches Gebiet

Die Erfindung betrifft einen Fahrzeugsitz, bei dem sich der Abstand zwischen einer Vorderkante und einer Hinterkante einer Sitzfläche dynamisch verändern lässt.

### Stand der Technik

Auf dem Gebiet der Fahrzeugsitze sind einstellbare Sitzflächen bekannt, insbesondere Sitzflächen, deren Länge sich dynamisch einstellen lassen.

So offenbart beispielsweise die DE 10 2012 009 591 A1 (GM Global Technology) einen Fahrzeugsitz, bei welchem die Ausdehnung der Sitzfläche in Längsrichtung mit einer konstanten Bewegungsgeschwindigkeit verändert werden kann, indem ein Luftbalg aufgeblasen wird. Die Sitzfläche kann in Querrichtung des Sitzes in Sitzteilelemente unterteilt sein, wobei zwischen wenigstens zwei Elementen je ein Luftbalg angeordnet ist. Die Zurückbewegung erfolgt aufgrund eines elastischen Elements, insbesondere einer Feder. Der Luftbalg kann durch Trennwände in mehrere Teilluftkammern unterteilt sein, die bevorzugt kommunizierend ausgebildet sind. Um die Bewegungsrichtung zu kontrollieren, ist wenigstens ein Führungselement am Fahrzeugsitz angeordnet.

Die WO 06/060833 A1 (Greiner Purtec) beschreibt ein Sitzpolster für einen Sitz, insbesondere für einen Flugzeugsitz. Die Sitztiefe lässt sich mit Hilfe eines in seinem Volumen veränderbar ausgebildeten Stellelements anpassen. In einer Ausführungsform ist das Stellelements als in einer Luftkammer ausgebildetes Schaumstoffelerrient ausgebildet.

Die WO 04/030496 A1 offenbart eine pneumatisch ausfahrbare Vorrichtung, welche an einer Sitzfläche eines Stuhles angebracht werden kann. Die Vorrichtung umfasst einen pneumatischen, harmonikaartig ausfahrbaren Hohlkörper mit welchem zusammen an einer Frontplatte befestigte Führungsmittel ausgefahren werden können. Federelemente werden mit zunehmendem Druck im Hohlkörper gedehnt und ziehen bei Druckentlastung den Hohlkörper wieder zurück.

Nachteilig an den vorbekannten verstellbaren Sitzflächen ist die Notwendigkeit, nebst einem pneumatischen Element auch mechanische Führungselemente einzusetzen. Dies verkompliziert den Aufbau eines derartigen Sitzes. Ausserdem haben die mechanischen Führungselemente ein gewisses Eigengewicht, was sich insbesondere beim Einsatz in Flugzeugsitzen negativ auswirkt.

### Darstellung der Erfindung

Aufgabe der Erfindung ist es, ein dem eingangs genannten technischen Gebiet zugehörender Fahrzeugsitz zu schaffen, der einen möglichst einfachen Aufbau sowie ein geringes Eigengewicht aufweist und welcher eine gute Längenverstellbarkeit ermöglicht.

Die Lösung der Aufgabe ist durch die Merkmale des Anspruchs 1 definiert. Gemäss der Erfindung umfasst ein Fahrzeugsitz eine Sitzfläche mit einer Vorderkante und einer Hinterkante sowie eine an der Hinterkante angeordnete und zur Sitzfläche in einem Winkel stehende Rückenlehne. Die Sitzfläche ist in ein Hauptteil und mindestens ein Vorderteil unterteilt. Die beiden Teile sind mittels einer Verstellvorrichtung relativ zueinander bewegbar, um einen Abstand zwischen der Vorderkante und der Hinterkante der Sitzfläche dynamisch einstellen zu können. Zwischen dem Hauptteil und dem Vorderteil sind wenigstens zwei aufblasbare Kammern angeordnet, welche in Abhängigkeit des Abstandes der Vorderkante zur Hinterkante aufblasbar und entleerbar sind.

Durch die wenigstens zwei aufblasbaren Kammern kann beim Verstellen des Vorderteils relativ zum Hauptteil der Sitzfläche die zwischen diesen Teilen entstehende Lücke gefüllt werden, so dass sich für einen auf der Sitzfläche befindlichen Benutzer unabhängig von Abstand zwischen der Vorderkante und der Hinterkante eine ebene Sitzfläche ergibt. Die wenigstens zwei aufblasbaren Kammern bilden im aufgeblasenen Zustand demnach einen Bestandteil der Sitzfläche.

Durch den Innendruck in den aufgeblasenen aufblasbaren Kammern ist zudem eine gute Kontrolle der Position des Vorderteils möglich, so dass auf zusätzliche, sperrige und schwere mechanische Führungen des Vorderteils verzichtet werden kann, was die Konstruktion des Fahrzeugsitzes vereinfacht und eine Gewichtseinsparung ermöglicht. Zudem können die wenigstens zwei aufblasbaren Kammern zugleich als Verstellvorrichtung verwendet werden. Dadurch lässt sich der Aufbau des Fahrzeugsitzes sowie dessen Gewicht weiter reduzieren, da keine anderweitige mechanische Verstellvorrichtung vorgesehen sein muss.

Der Winkel zwischen der Sitzfläche und der Rückenlehne kann bevorzugt über einen weiteren Verstellmechanismus verändert werden, so dass sich unterschiedliche Konfigurationen des Fahrzeugsitzes realisieren lassen. Einem Fachmann sind auf dem Gebiet eine Vielzahl an möglichen Verstelleinrichtungen zur Einstellung des Winkels zwischen einer Sitzfläche und einer Rückenlehne bekannt.

Grundsätzlich genügen die wenigstens zwei aufblasbaren Kammern als Verstellvorrichtung der Sitzfläche. Besonders bevorzugt wird die Bewegung des Vorderteils gegenüber dem Hauptteil der Sitzfläche jedoch durch eine separate, insbesondere mechanische Verstellvorrichtung realisiert. Insbesondere bevorzugt umfasst die Verstellvorrichtung einen elektrischen Motor sowie eine Spindel, mit deren Hilfe sich das Vorderteil relativ zum Hauptteil elektrisch verstellen lassen. Dies erhöht den Komfort eines Benutzers bei der Einstellung einer geeigneten Länge der Sitzfläche. Alternativ kann die Bewegung auch durch andere geeignete Mittel, wie Führungselementen unterstützt werden.

Die wenigstens zwei aufblasbaren Kammern sind bevorzugt als pneumatische Kissen ausgebildet. Je nach der gewünschten maximalen Verstellungslänge können auch mehr als zwei aufblasbare Kammern vorgesehen sein, wie z.B. drei, vier, fünf oder mehr aufblasbare Kammern.

Im Sinne der vorliegenden Anmeldung ist eine "aufblasbare Kammer" ein von einem flexiblen, flächigen Material umgebenen Innenraum, welcher mit einem Fluid, insbesondere einem Gas, insbesondere bevorzugt mit Luft gefüllt sein kann. Das flächige Material ist vorzugsweise derart geformt, dass die aufblasbare Kammer bei Erreichen eines maximalen Füllvolumens eine vordefinierte Form aufweist. Bei den aufblasbaren Kammern gemäss der vorliegenden Erfindung ist diese vordefinierte Form vorzugsweise ein Quader. Bevorzugt ist jede aufblasbare Kammer mit mindestens einer Zuleitung, über welche ein Fluid in die aufblasbare Kammer gefüllt oder aus der Kammer ausgelassen werden kann, verbunden. Diese mindestens eine Zuleitung ist an wenigstens einem Ventilblock angeschlossen, der über ein Ventil verfügt, mit dem sich die mindestens eine Zuleitung mit einer Pumpe oder einem Druckluftsystem verbinden lässt. Vorzugsweise verfügt der wenigstens eine Ventilblock über mehrere Ventile, über welche sich mehrere Zuleitungen selektiv mit mindestens einer Pumpe oder einem Druckluftsystem verbinden lassen. Das Vorsehen eines Ventilblocks reduziert die Komplexität des Aufbaus des Fahrzeugsitzes. Die mindestens eine Zuleitung wird bevorzugt über einen Flansch, der sich auf einer Aussenwandung der aufblasbaren Kammer befindet, mit dieser verbunden.

Besonders bevorzugt verfügen die mindestens zwei aufblasbaren Kammern in deren Innenraum über mindestens einen Steg, welcher die Form des flächigen, den Innenraum umgebenden Materials stabilisiert.

Die wenigstens zwei aufblasbaren Kammern sind vorzugsweise über je eine Seitenfläche mechanisch miteinander verbunden. Die Seitenflächen werden bevorzugt miteinander verklebt. Alternativ sind auch andere Verbindungsarten geeignet, wie beispielsweise eine Naht oder ein Haftverschluss, wie beispielsweise ein Klettverschluss. Bevorzugt sind die aufblasbaren Kammern, welche an den Hauptteil beziehungsweise an das Vorderteil der Sitzfläche anliegen mechanisch mit diesem verbunden, insbesondere über eine Klebeverbindung oder über einen Haftverschluss, insbesondere einen Klettverschluss. Dadurch kann eine durchgehende, für einen Benutzer des Fahrzeugsitzes angenehme Sitzfläche geschaffen werden, d.h. die aufblasbaren Kammern bilden einen Teil der Sitzfläche.

Die wenigstens zwei aufblasbaren Kammern sind bevorzugt in Bewegungsrichtung des Vorderteils hintereinander angeordnet. Alternativ kann zwischen den mindestens zwei aufblasbaren Kammern auch mindestens ein weiteres starres Zwischenteil angeordnet sein.

Die wenigstens zwei aufblasbaren Kammern werden in Abhängigkeit des Abstandes der Vorderkante zur Hinterkante der Sitzfläche, d.h. in Abhängigkeit der Bewegung des Vorderteils zum Hauptteil der Sitzfläche aufgeblasen beziehungsweise entleert. Die wenigstens zwei aufblasbaren Kammern werden vorzugsweise in Bewegungsrichtung des Vorderteils sequentiell aufgeblasen beziehungsweise entleert, so dass zunächst eine aufblasbare Kammer vollständig aufgeblasen wird, bevor eine weitere aufblasbare Kammer aufgeblasen wird. Vorzugsweise erfolgt das Entleeren der aufblasbaren Kammern bei einer Verkleinerung der Sitzfläche in der umgekehrten Reihenfolge des Aufblasens, wobei zunächst eine aufblasbare Kammer vollständig entleert wird, bevor eine weitere aufblasbare Kammer entleert wird.

Die aufblasbaren Kammern weisen vorzugsweise alle dieselben Dimensionen auf. Alternativ können die aufblasbaren Kammern jedoch auch unterschiedliche Dimensionen aufweisen, so dass für jede einstellbare Distanz zwischen der Vorderkante und der Hinterkante durch aufblasen beziehungsweise entleeren einer geeigneten Kombination von aufblasbaren Kammern der Zwischenraum zwischen Hauptteil und Vorderteil ausgefüllt werden kann. Dadurch wird es möglich, unterschiedliche Längeneinstellungen der Sitzfläche zu erreichen, bei denen jeweils einzelne aufblasbare Kammern entweder vollständig aufgeblasen oder vollständig entleert sind. Dies verhindert das Auftreten eines für einen Benutzer unangenehmen, weicheren Abschnitts der Sitzfläche, der bei einer nur unvollständig aufgeblasenen Kammer entstehen würde. Dadurch lässt sich eine über ihre gesamte Fläche einheitlich harte Sitzfläche erreichen.

Vorzugsweise weist der erfindungsgemässe Fahrzeugsitz eine Steuerungseinheit auf, welche ein automatisches aufblasen und entleeren der wenigstens zwei aufblasbaren Kammern ermöglicht. Dies erlaubt eine möglichst komfortable Bedienung des Fahrzeugsitzes durch einen Benutzer. Die Steuerungseinheit umfasst vorzugsweise einen Mikrochip, welcher über eine am Fahrzeugsitz angebrachte Bedieneinheit, z.B. in der Form von betätigbaren Knöpfen oder Schaltern, angesteuert wird. Die Steuerungseinheit öffnet und schliesst vorzugsweise entsprechende Ventile, um die aufblasbaren Kammern nach Bedarf aufzublasen oder zu entleeren. Beispielsweise kann ein Benutzer eine vorbestimmte Konfiguration des Fahrzeugsitzes, wie z.B. "normale Sitzposition", "Relax" etc. auswählen, wobei die Steuerungseinheit das Aufblasen oder Entleeren der aufblasbaren Kammern derart steuert, dass der für die gewählte Position vorgesehene Abstand zwischen Vorderkante und Hinterkante der Sitzfläche automatisch erreicht wird. Besonders bevorzugt kann ein Benutzer über die Bedieneinheit die Länge der Sitzfläche individuell einstellen, wobei die Steuerungseinheit entsprechend der Eingaben des Benutzers das Aufblasen beziehungsweise Entleeren der wenigstens zwei aufblasbaren Kammern steuert.

Ist nebst den aufblasbaren Kammern eine separate, mechanische Verstelleinrichtung vorhanden, so ist die Steuerungseinheit vorzugsweise derart ausgebildet, dass ein Aufblasen und Entleeren der einzelnen aufblasbaren Kammern mit der Bewegung der Verstelleinrichtung koordiniert erfolgt. Beispielsweise kann bei der Anwesenheit einer durch einen elektrischen Motor angetriebenen Spindel, welche das Vorderteil der Sitzfläche bewegt, das Aufblasen und Entleeren einzelner aufblasbarer Kammern mit der Drehgeschwindigkeit der Spindel oder der Anzahl an Umdrehungen koordiniert werden, so dass ein auf der Sitzfläche sitzender Benutzer stets eine im Wesentlichen gleichmässige Sitzfläche spürt.

Beim Entleeren einer aufblasbaren Kammer wird das in der aufblasbaren Kammer vorhandene Fluid vorzugsweise vollständig abgesaugt, zum Beispiel durch eine Pumpe.

Als "Fahrzeug" im Sinne der vorliegenden Anmeldung werden sämtliche Beförderungsmittel verstanden, mit denen sich Personen zu Lande, in der Luft oder auf dem Wasser transportieren lassen. Dies sind insbesondere Automobile, Busse, Züge, Flugzeuge, Helikopter, Boote und Schiffe. Dementsprechend wird unter dem Begriff "Fahrzeugsitz" ein Sitz zum Einsatz in einem dieser Fahrzeuge verstanden.

Das Vorderteil der Sitzfläche umfasst vorzugsweise eine mit Luft gefüllte Kammer. Dies ermöglicht eine weitere Gewichtsersparnis des Fahrzeugsitzes. Insbesondere bevorzugt umfassen auch der Hauptteil der Sitzfläche sowie allenfalls vorhandene Zwischenteile mit Luft gefüllte Kammern, so dass der Fahrzeugsitz insgesamt nur ein geringes Gewicht aufweist. Zudem lässt sich über luftgefüllte Kammern die Härte der Sitzfläche individuell einstellen, was den Komfort eines Benutzers wesentlich steigert.

Vorzugsweise weisen die wenigstens zwei aufblasbaren Kammern eine Aussenwandung mit vorgefertigten Sollfaltstellen auf. Dadurch wird beim Entleeren der aufblasbaren Kammern eine geordnete Faltung ermöglicht, so dass die entleerte aufblasbare Kammer möglichst wenig Platz einnimmt. Ferner kann dadurch auch verhindert werden, dass sich durch eine ungeordnete Faltung der entleerten Kammern auf der Sitzfläche für einen Benutzer unangenehme Faltungen ergeben.

Bevorzugt ist zwischen dem Hauptteil und dem Vorderteil der Sitzfläche ein Zugfederelement angeordnet. Durch das Zugfederelement erfolgt bei einer Entleerung der wenigstens zwei aufblasbaren Kammern eine automatische Bewegung des Vorderteils in Richtung Hauptteil.

Vorzugsweise umfasst der Fahrzeugsitz mindestens eine Pumpe, welche mit mindestens einer der aufblasbaren Kammern fluidisch verbunden ist. Dies ermöglicht ein möglichst einfaches und schnelles Aufpumpen der aufblasbaren Kammern.

Besonders bevorzugt ist jede der wenigstens zwei aufblasbaren Kammern über eine eigene Zuleitung mit der Pumpe verbunden, wobei jede Zuleitung ein Ventil aufweist, mit dem sich die fluidische Verbindung zwischen der aufblasbaren Kammer und der Pumpe unterbrechen lässt. Die einzelnen Ventile der Zuleitungen werden vorzugsweise von der Steuerungseinheit einzeln angesteuert. Die zu einem Fahrzeugsitz gehörenden Ventile sind vorzugsweise in einem Ventilblock zusammengefasst. Dadurch sind diese an einer zentralen Stelle lokalisiert, was deren Wartung und Austausch wesentlich vereinfacht. Ferner wird auch die nötige Verkabelung zwischen der Steuerungseinheit und den Ventilen so wesentlich simpler. Zudem kann jedem Ventilblock vorzugsweise wenigstens eine Pumpe zugeordnet sein.

Besonders bevorzugt ist zwischen den Ventilen sowie den Zuleitungen ein Drucksensor angeordnet, um den innerhalb jeder aufblasbaren Kammer vorherrschenden Fluiddruck zu messen. Der gemessene Druck einer jeden aufblasbaren Kammer wird vorzugsweise an die Steuerungseinheit übermittelt. Die Steuerungseinheit schaltet die entsprechenden Ventile sowie die zugeordnete Pumpe so, dass im Innern der aufblasbaren Kammern stets derselbe Druck vorherrscht, beispielsweise 5 kPa (50 Millibar).

Die wenigstens eine Pumpe ist vorzugsweise derart ausgestaltet, dass diese sowohl zum Aufpumpen als auch zum aktiven Entleeren, d.h. zum Absaugen des Fluids in den aufblasbaren Kammern ausgelegt ist.

Vorzugsweise ist über dem Hauptteil, dem Vorderteil sowie den wenigstens zwei aufblasbaren Kammern ein Textilbezug angeordnet, welcher mittels einer unterhalb der Sitzfläche angeordneten Spannvorrichtung, insbesondere in Form eine Zugfeder, unter Zugspannung gehalten wird. Dies ergibt eine für einen Benutzer optisch ansprechende sowie bei Berührung angenehme, einheitliche Oberfläche der Sitzfläche. Durch die Spannvorrichtung wird erreicht, dass bei jedem eingestellten Abstand zwischen der Vorderkante und der Rückkante der Textilbezug unter Spannung steht und sich keine störenden Falten bilden. Alternativ kann der Textilbezug auch aus einem elastischen Textil bestehen, welches sich von selbst an die unterschiedlichen Abstände anpasst.

Die wenigstens zwei aufblasbaren Kammern sind vorzugsweise mit einem feuerhemmenden Gewebe überzogen. Dadurch kann der erfindungsgemässe Fahrzeugsitz die vorgeschriebenen Sicherheitsnormen im Fahrzeugbau, insbesondere für Flugzeuge einhalten.

Besonders bevorzugt umfasst der Fahrzeugsitz zwei Vorderteile sowie ein Hauptteil, wobei zwischen je einem der zwei Vorderteile sowie dem Hauptteil wenigstens zwei aufblasbare Kammern angeordnet sind.

Dadurch kann ein erfindungsgemässer Fahrzeugsitz mit individuell einstellbaren Beinstützen ausgestaltet werden. Dies ist insbesondere bei der Verwendung eines erfindungsgemässen Sitzes als Fahrer- oder Pilotensitz vorteilhaft, da der Benutzer die Beinstützen individuell so einstellen kann, dass am Boden befindliche Pedale bequem erreicht werden können.

Insbesondere bevorzugt ist der Fahrzeugsitz ein Flugzeugsitz. Durch die besonders einfache und gewichtsparende Bauweise weist ein erfindungsgemässer Fahrzeugsitz für den Flugzeuginnenausbau vorteilhafte Eigenschaften auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Seitenansicht einer ersten Ausführungsform eines erfindungsgemässen Fahrzeugsitzes;
- Fig. 2: eine schematische Seitenansicht des Fahrzeugsitzes aus der Fig. 1 mit aufgeblasenen aufblasbaren Kammern;
- Fig. 3a, 3b: Draufsichten einer Sitzfläche eines Fahrzeugsitzes gemäss der vorliegenden Erfindung;
- Fig. 4a - 4c: Draufsichten einer Sitzfläche einer zweiten Ausführungsform eines erfindungsgemässen Fahrzeugsitzes;
- Fig. 5a, 5b: Draufsichten einer Sitzfläche einer weiteren Ausführungsform mit zwei Vorderteilen.

Grundsätzlich sind in den Figuren gleiche Teile mit gleichen Bezugszeichen versehen.

### Wege zur Ausführung der Erfindung

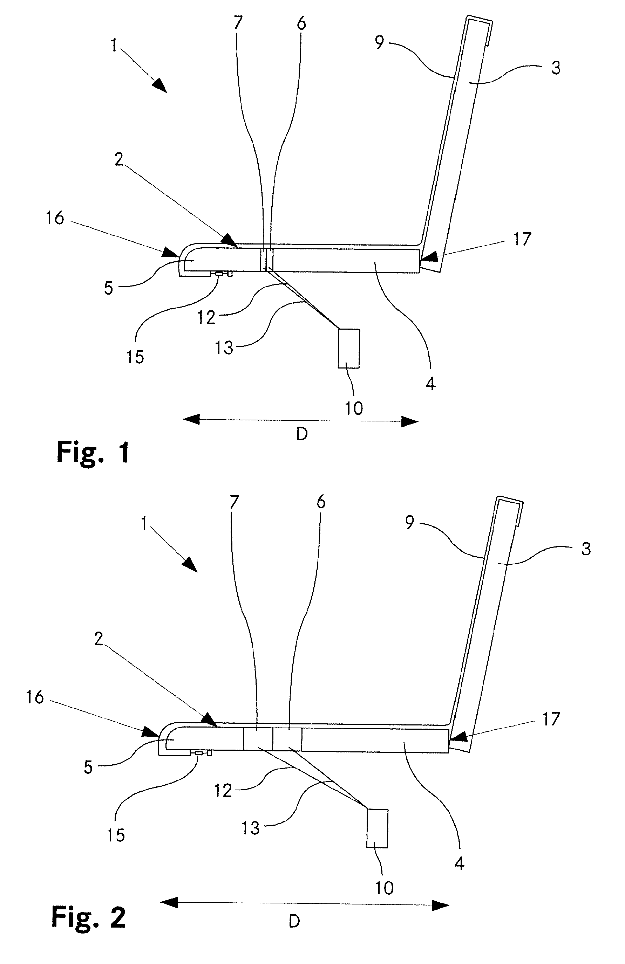

Die Figur 1 zeigt eine schematische Seitenansicht einer ersten Ausführungsform des erfindungsgemässen Fahrzeugsitzes 1. Zur Vereinfachung der Darstellung wird kein Unterbau des Fahrzeugsitzes 1 gezeigt.

Der Fahrzeugsitz 1 umfasst eine Sitzfläche 2 sowie eine Rückenlehne 3. Die Rückenlehne 3 ist an einer Hinterkante 17 der Sitzfläche 2 angeordnet und weist einen Winkel gegenüber der Sitzfläche 2 auf. Bevorzugt lässt sich der Winkel zwischen Rückenlehne 3 und Sitzfläche 2 über einen Mechanismus (nicht gezeigt) verändern.

Die Sitzfläche 2 verfügt über einen Hauptteil 4 und ein Vorderteil 5. Das Vorderteil 5 umfasst eine Vorderkante 16 der Sitzfläche 2, welche bei der gezeigten Ausführungsform zur Verbesserung des Komforts eines Benutzers des Fahrzeugsitzes 1 abgerundet ausgestaltet ist. Zwischen dem Hauptteil 4 und dem Vorderteil 5 sind zwei aufblasbare Kammern 6, 7 angeordnet. In der Fig. 1 sind beide aufblasbaren Kammern 6, 7 im leeren Zustand dargestellt. Dementsprechend weist die Sitzfläche 2 den kleinsten möglichen Abstand D zwischen der Vorderkante 16 und der Hinterkante 17 auf. Jede aufblasbare Kammer 6, 7 ist über eine Zuleitung 12, 13 mit einer Pumpe 10 verbunden.

Über die Sitzfläche 2 sowie über die Rückenlehne 3 ist ein Textilbezug 9 angeordnet. Der Textilbezug 9 ist an der Unterseite des Vorderteils 5 der Sitzfläche 2 mit einer Spannvorrichtung 15 verbunden, welche den Textilbezug 9 in jedem Befüllungszustand der aufblasbaren Kammern 6, 7 über der Sitzfläche 2 spannt. Die Spannvorrichtung 15 kann beispielsweise als Zugfeder ausgebildet sein. Zusätzlich ist der Textilbezug 9 an der Rückseite der Rückenlehne 3 befestigt. Je nach Ausgestaltung des Fahrzeugsitzes kann der Textilbezug 9 an weiteren Steifen mit der Sitzfläche 2 und/oder der Rückenlehne 3 befestigt sein.

Die Figur 2 zeigt den Fahrzeugsitz aus der Fig. 1 in einer schematischen Seitenansicht, wobei die aufblasbaren Kammern 6, 7 vollständig aufgeblasen sind. Durch das Aufblasen der beiden aufblasbaren Kammern 6, 7 kann der Abstand D zwischen der Vorderkante 16 und der Hinterkante 17 der Sitzfläche 2 vergrössert werden, d.h. die Sitzfläche 2 wird verlängert.

Alternativ kann die Verstellung des Abstandes D zwischen der Vorderkante 16 und der Hinterkante 17 über einen separaten, mechanischen oder elektrischen Verstellmechanismus (nicht gezeigt) dynamisch verändert werden, wobei jeweils die erste aufblasbare Kammer 6 und/oder die zweite aufblasbare Kammer 7 in Abhängigkeit des Abstandes zwischen Vorderkante 16 und Hinterkante 17 selektiv aufgeblasen oder entleert werden. Das Aufblasen sowie Entleeren wird vorzugsweise über eine Kontrolleinheit (nicht gezeigt) gesteuert. Durch das selektive Aufblasen der beiden aufblasbaren Kammern 6, 7 kann eine entstehende Lücke zwischen dem Hauptteil 4 und dem Vorderteil 5 gefüllt werden, so dass für einen Benutzer eine durchgehende Sitzfläche 2 vorliegt.

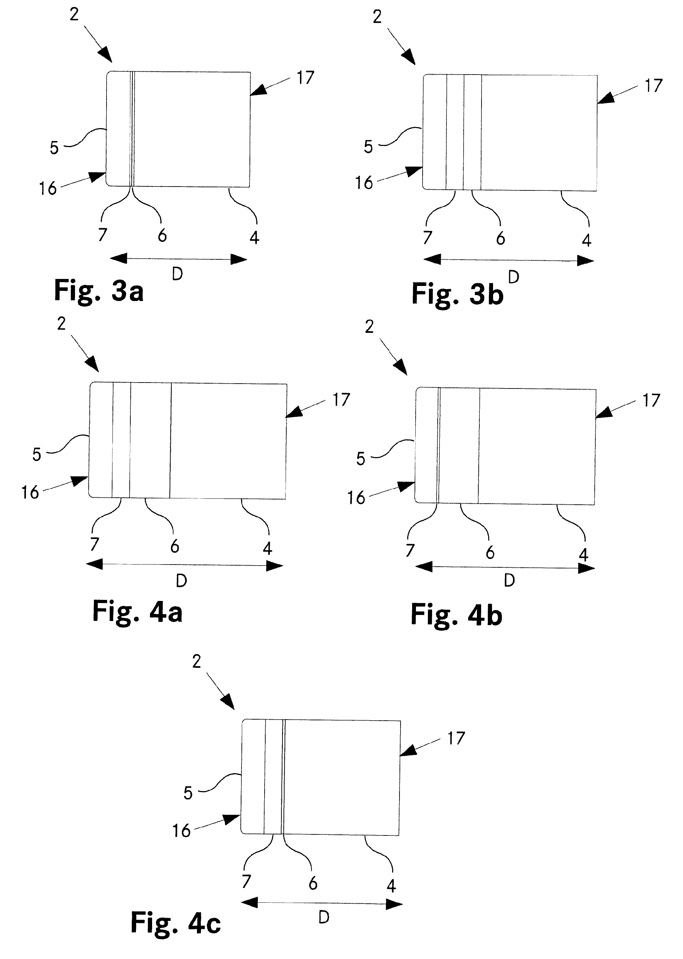

Die Figuren 3a, 3b zeigen eine Draufsicht auf eine Sitzfläche 2 eines erfindungsgemässen Fahrzeugsitzes 1. Die Fig. 3a stellt eine Sitzfläche 2 mit vollständig entleerten aufblasbaren Kammern 6, 7 dar, während die Fig. 3b eine Sitzfläche mit vollständig aufgeblasenen aufblasbaren Kammern 6, 7 zeigt. Gut ersichtlich ist die Vergrösserung des Abstandes D zwischen der Vorderkante 16 und der Hinterkante 17.

Die Figuren 4a bis 4c zeigen eine Sitzfläche 2 einer zweiten Ausführungsform eines erfindungsgemässen Fahrzeugsitzes 1. In dieser Ausführungsform weisen die beiden aufblasbaren Kammern 6, 7 unterschiedliche Grössen auf. Durch selektives Aufblasen der ersten aufblasbaren Kammer 6 und/oder der zweiten aufblasbaren Kammer 7 lassen sich so unterschiedliche Abstände D zwischen der Vorderkante 16 und der Hinterkante 17 der Sitzfläche 2 einstellen. Ein Fachmann wird erkennen, dass nebst einer Variation der Grösse der aufblasbaren Kammern 6, 7 auch eine Variation von deren Anzahl möglich ist, um möglichst viele unterschiedliche Abstände D zwischen der Vorderkante 16 und der Hinterkante 17 der Sitzfläche 2 einstellen zu können.

Die Figur 4a stellt die Sitzfläche 2 mit vollständig aufgeblasenen aufblasbaren Kammern 6, 7 dar, während die Figur 4b die Sitzfläche 2 nur bei aufgeblasener erster aufblasbarer Kammer 6 zeigt. Die Figur 4c zeigt die Sitzfläche 2 nur mit vollständig aufgeblasener zweiter Kammer 7.

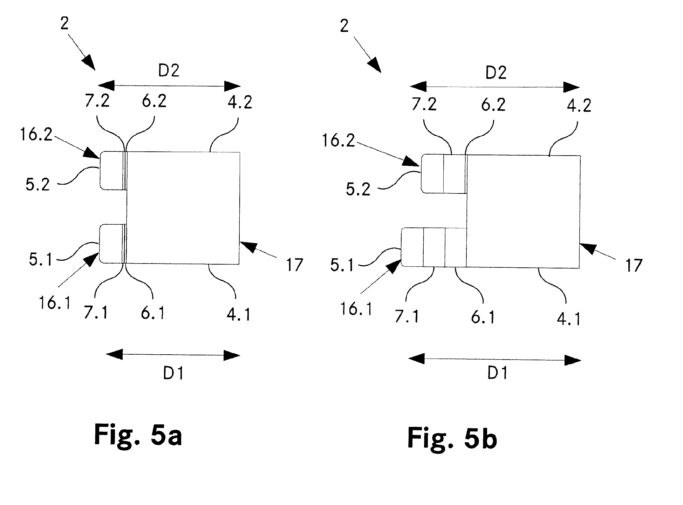

Die Figuren 5a und 5b zeigen Draufsichten der Sitzfläche 2 einer weiteren Ausführungsform eines erfindungsgemässen Fahrzeugsitzes 1. Bei dieser Ausführungsform weist die Sitzfläche 2 ein Hauptteil 4 sowie zwei Vorderteile 5.1, 5.2 auf. Zwischen dem Hauptteil 4 und den beiden Vorderteilen 5.1, 5.2 sind je zwei aufblasbare Kammern 6.1, 6.2, 7.1, 7.2 angeordnet, welche individuell aufblasbar und entleerbar sind. Bei dieser Ausführungsform des erfindungsgemässen Fahrzeugsitzes 1 lassen sich die beiden Vorderteile 5.1, 5.2 als individuell einstellbare Beinstützen einsetzen. Wie die Figur 5b zeigt, lassen sich für jedes Vorderteil unterschiedliche Abstände D1, D2 zwischen den jeweiligen Vorderkanten 16.1, 16.2 und der Hinterkante 17 der Sitzfläche 2 einstellen.

## Patentansprüche

1. Fahrzeugsitz umfassend eine Sitzfläche (2) mit einer Vorderkante (16; 16.1, 16.2) und einer Hinterkante (17) sowie eine an der Hinterkante (17) angeordnete und zur Sitzfläche (2) in einem Winkel stehende Rückenlehne (3), wobei die Sitzfläche (2) in ein Hauptteil (4) und mindestens ein Vorderteil (5; 5.1, 5.2) unterteilt ist, die mittels einer Verstellvorrichtung relativ zueinander bewegbar sind, um einen Abstand (D; D1, D2) zwischen der Vorderkante (16; 16.1, 16.2) und der Hinterkante (17) dynamisch einstellen zu können, **dadurch gekennzeichnet, dass** zwischen dem Hauptteil (4) und dem mindestens einen Vorderteil (5; 5.1, 5.2) wenigstens zwei aufblasbare Kammern (6, 7; 6.1, 6.2, 7.1, 7.2) angeordnet sind, welche in Abhängigkeit des Abstandes (D; D1, D2) der Vorderkante (16; 16.1, 16.2) zur Hinterkante (17) aufblasbar und entleerbar sind.

2. Fahrzeugsitz gemäss Anspruch 1, **dadurch gekennzeichnet, dass** das mindestens eine Vorderteil (5; 5.1, 5.2) der Sitzfläche (2) eine mit Luft gefüllte Kammer umfasst.

3. Fahrzeugsitz gemäss einem der Ansprüche 1 oder 2, **dadurch gekennzeichnet, dass** die wenigstens zwei aufblasbaren Kammern (6, 7; 6.1, 6.2, 7.1, 7.2) eine Aussenwandung mit vorgefertigten Sollfaltstellen aufweisen.

4. Fahrzeugsitz gemäss einem der Ansprüche 1 bis 3, **dadurch gekennzeichnet, dass** zwischen dem Hauptteil (4) und dem mindestens einen Vorderteil (5; 5.1, 5.2) ein Zugfederelement angeordnet ist.

5. Fahrzeugsitz gemäss einem der Ansprüche 1 bis 4, **dadurch gekennzeichnet, dass** der Fahrzeugsitz (1) mindestens eine Pumpe (10) umfasst, welche mit den mindestens zwei aufblasbaren Kammern (6, 7; 6.1, 6.2, 7.1, 7.2) fluidisch verbunden ist.

6. Fahrzeugsitz gemäss Anspruch 5, **dadurch gekennzeichnet, dass** die Pumpe (10) derart ausgestaltet ist, dass diese die mindestens zwei aufblasbaren Kammern (6, 7; 6.1, 6.2, 7.1, 7.2) sowohl aufpumpen wie auch entleeren kann.

7. Fahrzeugsitz gemäss einem der Ansprüche 1 bis 6, **dadurch gekennzeichnet, dass** über dem Hauptteil (4), dem mindestens einen Vorderteil (5; 5.1, 5.2) sowie den wenigstens zwei aufblasbaren Kammern (6, 7; 6.1, 6.2, 7.1, 7.2) ein Textilbezug (9) angeordnet ist, welcher mittels einer unterhalb der Sitzfläche (2) angeordneten Spannvorrichtung (15), insbesondere in Form eine Zugfeder, unter Zugspannung gehalten wird.

8. Fahrzeugsitz gemäss einem der Ansprüche 1 bis 7, **dadurch gekennzeichnet, dass** die wenigstens zwei aufblasbaren Kammern (6, 7; 6.1, 6.2, 7.1, 7.2) mit einem feuerhemmenden Gewebe überzogen sind.

9. Fahrzeugsitz gemäss einem der Ansprüche 1 bis 8, **dadurch gekennzeichnet, dass** der Fahrzeugsitz (1) zwei Vorderteile (5.1, 5.2) sowie ein Hauptteil (4) umfasst, wobei zwischen je einem der zwei Vorderteile (5.1, 5.2) sowie dem Hauptteil (4) wenigstens zwei aufblasbare Kammern (6.1, 6.2, 7.1, 7.2) angeordnet sind.

10. Fahrzeugsitz gemäss einem der Ansprüche 1 bis 9, **dadurch gekennzeichnet, dass** der Fahrzeugsitz (1) ein Flugzeugsitz ist.
